# FASCICULE DE BREVET EUROPEEN

(11) **EP 1 407 595 B1**
(45) Date de publication et mention de la délivrance du brevet: **20.09.2006**
(21) Numéro de dépôt: 02767542.0
(22) Date de dépôt: 01.07.2002
(51) Int. Cl.: H04L 29/06

(54) **PROCEDE DE DIFFUSION D'UN CONTENU VERS DES TERMINAUX RECEPTEURS ET SERVEUR DE COLLECTE**
VERFAHREN ZUR VERBREITUNG VON INHALT EIN ERFASSUNGSSERVER UND EMPFÄNGER
METHOD OF DELIVERING CONTENT FROM A SOURCE (S) TO DESTINATION TERMINALS (TI) AND THE ASSOCIATED DATA FLOW, SYSTEM, DESTINATION TERMINAL AND COLLECTION SERVER

(30) Priorité: 13.07.2001 FR 0109440
(43) Date de publication de la demande: 14.04.2004
(73) Titulaire: FRANCE TELECOM, 75015 Paris (FR)
(72) Inventeur: BERTIN, Christian, F-35000 Rennes (FR)
(86) Numéro de dépôt international: PCT/FR2002/002289
(87) Numéro de publication internationale: WO 2003/009562

(56) Documents cités:
- FR-A- 2 758 897
- BUSSE I ET AL: "Dynamic QoS control of multimedia applications based on RTP" COMPUTER COMMUNICATIONS, ELSEVIER SCIENCE PUBLISHERS BV, AMSTERDAM, NL, vol. 19, no. 1, 1996, pages 49-58, XP004032389 ISSN: 0140-3664
- BOLOT J-C ET AL: "SCALABLE FEEDBACK CONTROL FOR MULTICAST VIDEO DISTRIBUTION IN THE INTERNET" COMPUTER COMMUNICATIONS REVIEW, ASSOCIATION FOR COMPUTING MACHINERY. NEW YORK, US, vol. 24, no. 4, 1 octobre 1994 (1994-10-01), pages 58-67, XP000477042 ISSN: 0146-4833
- HANDLEY M ET AL: "SDP: Session Description Protocol" XP002101463 le document en entier

## Description

La présente invention concerne un procédé de diffusion d'un contenu en temps réel à partir d'une source vers une pluralité de terminaux récepteurs, à travers un réseau informatique, par exemple l'Internet.

L'Internet permet aujourd'hui de diffuser en temps réel des contenus multimédias, tels que des émissions de télévision, des films vidéo, des conférences et autres programmes, vers une large audience de terminaux récepteurs. Il existe principalement deux méthodes pour diffuser en temps réel un contenu depuis une source vers une pluralité de terminaux récepteurs, à travers l'Internet.

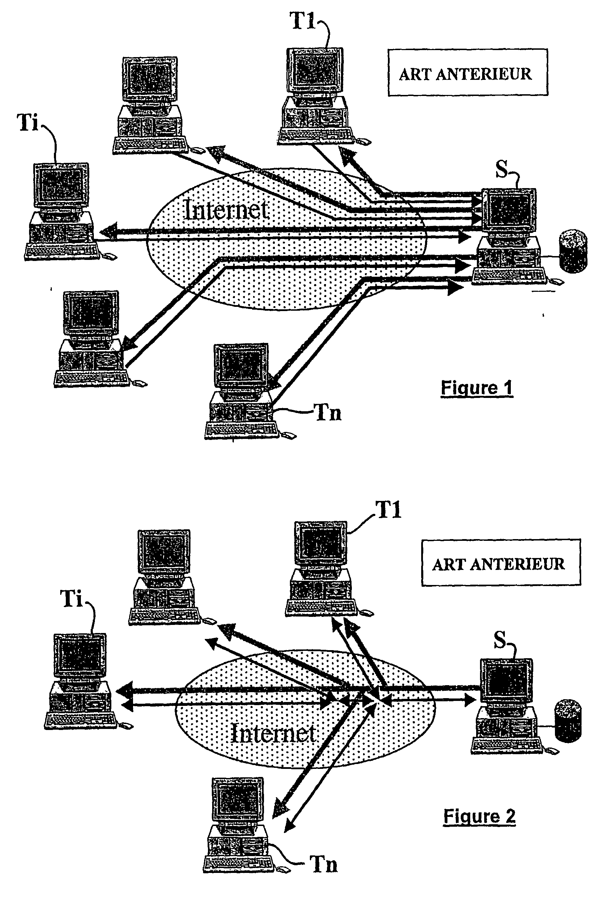

En référence à la figure 1, la première méthode, dite "unicast", consiste à envoyer le même contenu autant de fois qu'il y a de terminaux récepteurs T1,..., Ti, ..., Tn. La source S établit une liaison point-à-point avec chacun des terminaux récepteurs, décompose le contenu à diffuser en paquets de données IP, encore appelés "datagrammes", duplique chaque datagramme IP en n exemplaires, n étant égal au nombre de terminaux récepteurs Ti, et envoie ces n exemplaires vers les n terminaux récepteurs Ti respectivement.

En référence à la figure 2, la seconde méthode, dite "multicast", permet à la source S de diffuser un contenu multimédia vers une pluralité de terminaux récepteurs, en un seul envoi. Lors de la diffusion du contenu, la source S émet des datagrammes IP, lesquels sont dupliqués en cascade par des noeuds du réseau, que l'on appellera par la suite des "routeurs", afin d'être acheminés jusqu'aux terminaux récepteurs Ti. Si aucun terminal Ti ne demande à recevoir les datagrammes IP émis par la source, ces derniers ne sont pas acheminés au-delà du premier noeud du réseau et sont donc perdus. Lorsqu'un terminal Ti souhaite recevoir le contenu multimédia diffusé par la source S, il envoie une requête d'acquisition de ce contenu en direction de la source S, à travers l'Internet, en utilisant le protocole IGMP (Internet Group Management Protocol). Le premier routeur multicast, recevant déjà les datagrammes IP diffusés par la source et qui reçoit cette requête, se charge de dupliquer les datagrammes IP puis les achemine vers le terminal ou vers un autre routeur. Par "routeur multicast", on entend désigner un noeud du réseau qui reçoit les datagrammes diffusés par la source S et les achemine vers au moins un terminal récepteur, après les avoir éventuellement dupliqués.

Pour recevoir un contenu multimédia diffusé par une source, en mode unicast ou multicast, chaque terminal récepteur doit au préalable récupérer un fichier descriptif SDP (Session Description Protocol) associé à la source, par exemple par téléchargement depuis un site Web. La structure du fichier SDP, définie par l'IETF (Internet Engineering Task Force), est décrite dans le document RFC2327. Ce fichier est destiné à véhiculer les informations requises pour permettre aux terminaux récepteurs de recevoir les contenus multimédias diffusés par la source. A chaque source correspond un fichier SDP général, contenant toutes les informations requises pour se mettre en réception de cette source, quel que soit le contenu diffusé par celle-ci. En outre, à chaque contenu diffusé (émission TV, film, conférence, etc.) correspond un fichier SDP spécifique contenant toutes les informations nécessaires pour recevoir ce contenu particulier. Le fichier SDP général de la source est valable quel que soit le contenu diffusé par la source, alors que le fichier SDP d'un contenu spécifique n'est valable que pour la diffusion de ce contenu.

Le protocole de transmission de données essentiellement utilisé pour la diffusion en temps réel, en mode unicast ou multicast, à travers l'Internet, est le protocole RTP (Real-time Transfer Protocol). Il est généralement associé au protocole RTCP (Real-time Transfer Control Protocol) de contrôle des flux de données qui permet aux terminaux récepteurs de faire remonter vers la source des rapports de réception contenant des informations QoS (Quality of Service) sur la qualité de la réception, telles que l'indication du débit de réception ou le taux de perte de datagrammes. Selon le protocole RTP, pour diffuser un contenu multimédia, la source émet une pluralité de flux véhiculant les données correspondant à une pluralité de média respectivement. A titre d'exemple, pour diffuser un film vidéo en deux langues, la source émet un flux vidéo et deux flux audios pour les deux langues respectivement. En outre, les données d'un même média, par exemple vidéo ou audio, peuvent être véhiculées par plusieurs flux ayant des débits de données différents. A titre d'exemple, pour diffuser la composante vidéo d'un contenu audiovisuel, la source peut émettre trois flux vidéos, à 400kbits/s chacun, dont un flux vidéo de base Vb, un premier flux vidéo de rehaussement Ve1 (Video enhancement 1) et un second flux vidéo de rehaussement Ve2 (Video enhancement 2). En réception, suivant leurs capacités, les terminaux récepteurs utilisent le flux vidéo de base en y ajoutant éventuellement le flux vidéo Ve1 et/ou le flux vidéo Ve2 afin d'obtenir une meilleure qualité vidéo. En variante, la source peut émettre trois flux vidéos à 400kbits/s, 800kbits/s et 1200kbits/s respectivement, les terminaux récepteurs sélectionnant l'un seul de ces trois flux suivant leurs capacités. Pour recevoir un contenu multimédia véhiculé par n flux, les terminaux récepteurs utilisent n paires de ports de communication, chaque paire comprenant un port RTP et un port RTCP, pour recevoir les n flux et émettre les n rapports de réception associés à ces n flux. Les ports de communication RTP et RTCP associés d'une même paire se suivent, le port RTP étant pair et le port RTCP impair.

En unicast, la source établit autant de liaisons point-à-point qu'il y a de terminaux récepteurs et reçoit régulièrement des rapports de réception, contenant des informations QoS, à travers ces liaisons point-à-point. La source peut donc sans difficulté être informée d'éventuels problèmes de réception d'un terminal donné. Cependant, la technique unicast est gourmande en bande passante et donc inadaptée à la diffusion vers une large audience.

A l'inverse, la technique multicast permet de réduire considérablement la consommation en bande passante. Cependant, les terminaux récepteurs n'étant pas connectés directement à la source, elle ne permet pas d'évaluer de façon simple la qualité de réception par les terminaux.

En unicast et en multicast, le protocole RTCP permet certes de faire remonter des informations QoS vers la source, mais ce protocole présente de nombreux inconvénients du fait qu'il est intimement lié au protocole RTP. En effet, dans le cas où le contenu diffusé est véhiculé par une pluralité de flux RTP, les terminaux envoient périodiquement un rapport de réception pour chaque flux RTP reçu. Il en résulte que la source reçoit un nombre considérable de rapports, dont la plupart sont redondants. Le document FR-A-2 758 897 concerne un procédé de mesure des performances et de suivi de la qualité de service d'un système d'information.

Le problème technique posé par la présente invention consiste donc à proposer un procédé de diffusion en temps réel d'un contenu à partir d'une source vers une pluralité de terminaux récepteurs, à travers un réseau informatique, dans lequel chaque terminal récupère des données descriptives associées à la source, la source diffuse le contenu à travers le réseau et les terminaux récepteurs acquièrent le contenu diffusé, à partir des données descriptives, qui permette d'évaluer la qualité de réception des terminaux de façon simple.

Le problème est résolu par le fait qu'on insère dans lesdites données descriptives une adresse d'un serveur de collecte et, à partir desdites données descriptives, chaque terminal en réception de la source de diffusion envoie un rapport sur la réception par le terminal du contenu diffusé par ladite source de diffusion vers l'adresse du serveur de collecte.

La présente invention tire essentiellement son origine d'un problème de diffusion en multicast. Toutefois, la demanderesse entend ne pas limiter la portée de sa demande à cet exemple particulier mais l'étendre à tout type de diffusion, et notamment à la diffusion en unicast.

En séparant la source et le collecteur de rapports, on s'affranchit des inconvénients du protocole RTCP. La solution de la présente invention offre l'avantage supplémentaire de ne pas surcharger la source par des remontées de rapports de réception. La source n'est pas chargée du traitement de ces rapports et peut donc exploiter toutes ses capacités exclusivement pour la diffusion. Un autre avantage réside dans le fait que les rapports de réception donnent des informations sur la qualité globale de réception et non pas sur la qualité de réception d'un flux particulier. Grâce à cela, l'exploitation de ces rapports est considérablement facilitée. En outre, l'adresse étant insérée dans les données descriptives associées à la source, le terminal récepteur la récupère sans effectuer d'action spécifique et sans équipement supplémentaire.

Avantageusement, on insère dans lesdites données descriptives une information de périodicité de façon à ce que chaque terminal récepteur envoie périodiquement au serveur de collecte un rapport sur la réception par le terminal du contenu diffusé par ladite source de diffusion.

De préférence, chaque terminal insère dans le rapport sur la réception par le terminal du contenu diffusé par ladite source de diffusion une information sur la qualité de la réception. Il peut aussi y insérer une indication géographique de localisation. Grâce à cela, on peut éventuellement détecter un problème de réception lié à l'infrastructure d'un réseau local desservant des terminaux situés dans une zone géographique donnée.

De préférence encore, le serveur de collecte attribue une information d'horodatage à chaque rapport sur la réception par le terminal du contenu diffusé par ladite source de diffusion reçu.

Avantageusement, le serveur de collecte élabore un bilan concernant la réception par les terminaux du contenu diffusé par la source de diffusion, à partir des rapports provenant des terminaux en réception de ladite source. Ce bilan peut comprendre des histogrammes, pour différents instants donnés, sur lesquels figurent, en abscisses, le débit de réception des terminaux et, en ordonnées, le nombre de terminaux en réception de la source de diffusion. Ces histogrammes constituent des photographies de la qualité de la réception de la population de terminaux en réception.

Dans un mode de réalisation particulier, une pluralité de sources diffusant des contenus vers une pluralité de groupes de terminaux récepteurs, l'ensemble des terminaux appartenant aux différents groupes envoient des rapports concernant la réception des contenus diffusés par leurs sources de diffusion respectives vers le même serveur de collecte. Ainsi, le serveur de collecte peut recueillir les rapports de réception des terminaux appartenant à différents groupes multicast et élaborer un bilan de réception pour chacune des sources de diffusion multicast.

On peut insérer les données descriptives dans un fichier SDP.

On peut aussi diffuser l'adresse du serveur de collecte à travers un canal de signalisation associé à la source.

L'invention concerne aussi un terminal récepteur pour la mise en oeuvre du procédé précédemment défini, caractérisé par le fait qu'il est agencé pour récupérer des données descriptives associées à une source de diffusion, lesdites données contenant une adresse d'un serveur de collecte, et pour émettre au moins un rapport concernant la réception d'un contenu diffusé par la source de diffusion vers l'adresse dudit serveur de collecte.

L'invention concerne encore un système pour la mise en oeuvre du procédé précédemment défini comprenant
- une source de diffusion destinée à diffuser un contenu à travers un réseau,
- un serveur de collecte et
- une pluralité de terminaux récepteurs destinés à récupérer des données descriptives associées à la source de diffusion, lesdites données descriptives contenant une adresse du serveur de collecte, à acquérir le contenu diffusé par la source de diffusion à partir des données descriptives et à émettre au moins un rapport sur la réception du contenu diffusé par la source de diffusion vers l'adresse du serveur de collecte,
ledit serveur de collecte étant destiné à élaborer un bilan concernant la réception par lesdits terminaux du contenu diffusé par la source de diffusion, à partir des rapports provenant des terminaux en réception de ladite source.

L'invention concerne enfin un flux de données pour la mise en oeuvre du procédé présenté ci-dessus, contenant des données descriptives relatives à un contenu et/ou à une source de diffusion, à partir desquelles un terminal peut se mettre en réception d'un contenu diffusé par la source de diffusion, caractérisé par le fait que lesdites données descriptives contiennent une adresse d'un serveur de collecte de façon à ce que le terminal, lorsqu'il est en réception d'un contenu diffusé par la source de diffusion, envoie un rapport sur la réception dudit contenu vers l'adresse du serveur de collecte.

L'invention sera mieux comprise à l'aide de la description suivante d'un modes de réalisation particuliers du procédé de diffusion, du serveur de collecte, du terminal récepteur, du système et du flux de données de l'invention, en référence au dessin annexé sur lequel:
- la figure 3 représente une vue schématique d'une pluralité de terminaux récepteurs, d'une source de diffusion et d'un serveur de collecte;
- la figure 4 représente une vue schématique de l'un des terminaux récepteurs, d'un site Web, de la source de diffusion et du serveur de collecte, avec les différentes étapes du procédé de diffusion, selon le mode de réalisation particulier de l'invention;
- les figures 5 à 7 représentent des organigrammes du procédé de diffusion, selon le mode de réalisation particulier de l'invention, et

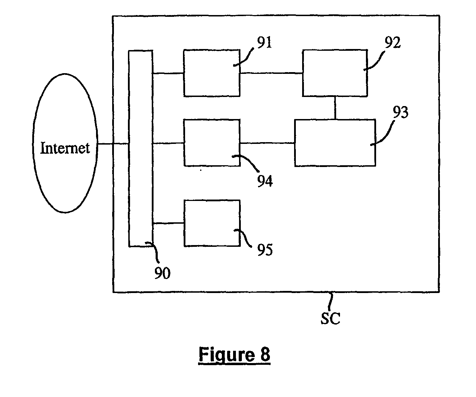

- la figure 8 représente un schéma bloc fonctionnel du serveur de collecte de la figure 1.

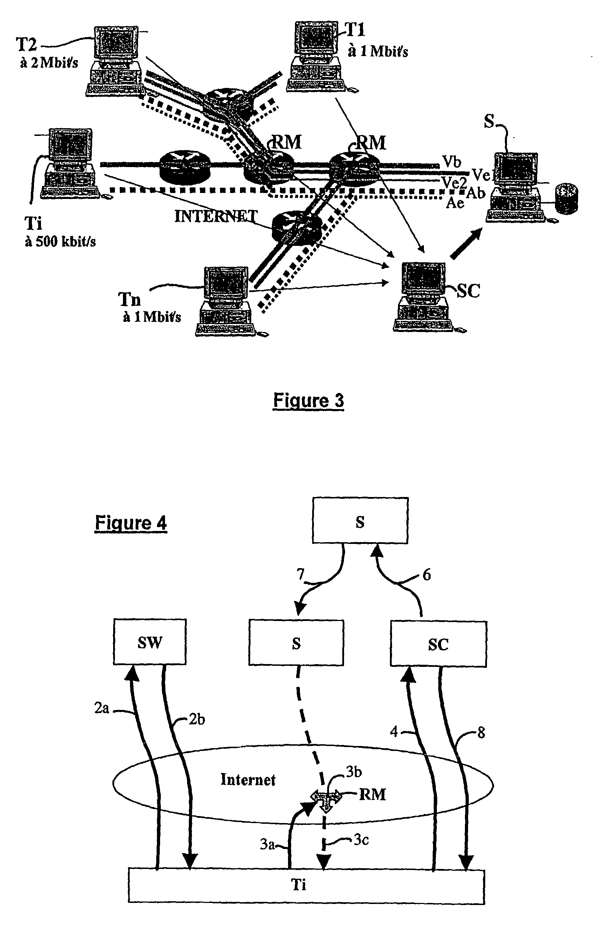

Sur la figure 3, on a représenté un réseau informatique, en l'espèce l'Internet, et un système comprenant une pluralité de terminaux récepteurs T1, T2,...,Ti,..., Tn, des routeurs Internet RM, une source S de diffusion de contenus et un serveur de collecte SC. Les différents terminaux T1, T2,...,Ti,..., Tn ont des capacités de réception de données différentes (1Mbit/s, 2Mbit/s, 500kbit/s, etc.). La source S est ici une chaîne de diffusion audiovisuelle, que l'on appellera par la suite "chaîne 1", hébergée par un serveur audiovisuel de l'Internet et destinée à diffuser en mode multicast des contenus audiovisuels (émissions télévisées, films vidéos, etc.), à travers l'Internet, vers des terminaux récepteurs. Le serveur audiovisuel pourrait héberger d'autres sources de diffusion.

Un centre de programmation CP, non représenté, est destiné à établir une grille de programmation pour la diffusion des contenus audiovisuels par la source S et à créer, pour la source S, un fichier descriptif SDP général, contenant toutes les informations nécessaires pour permettre à un terminal de se mettre en réception de la source S, ainsi que, pour chaque contenu diffusé, un fichier descriptif SDP spécifique contenant toutes les informations requises pour recevoir ce contenu. Les fichiers descriptifs SDP, associés à la source S, sont transmis au site Web SW à partir duquel ils peuvent être téléchargés par des terminaux.

On notera ici que la structure d'un fichier SDP, telle que définie par l'IETF, est la suivante:

### Session description

v= (protocol version)
o= (owner/creator and session identifier).
s= (session name)
i=* (session information)
u=* (URI of description)
e=* (email address)
p=* (phone number)
c=* (connection information - not required if included in all media)
b=* (bandwidth information)
   One or more time descriptions (see below)
z=* (time zone adjustments)
k=* (encryption key)
a=* (zero or more session attribute lines)
   Zero or more media descriptions (see below)

### Time description

t= (time the session is active)
r=* (zero or more repeat times)

### Media description

m= (media name and transport address)
i=* (media title)
c=* (connection information - optional if included at session-level)
b=* (bandwidth information)
k=* (encryption key)
a=* (zero or more media attribute lines)

Les champs marqués du caractère "*" sont optionnels.

Pour plus d'informations concernant la structure de données SDP, le lecteur est invité à se reporter au document RFC2327 issu de l'IETF.

Le serveur de collecte SC, connecté à l'Internet, est destiné à recueillir des rapports sur la réception par les terminaux récepteurs Ti des contenus diffusés par la source de diffusion S. II comprend une interface 90 de connexion à l'Internet, un bloc 91 de réception des rapports, un bloc 92 d'horodatage des rapports de réception, un bloc de traitement 93, un bloc 94 d'émission de ce bilan vers la source S et un bloc 95 de modification de la période d'envoi des rapports de réception provenant des terminaux récepteurs Ti. Tous ces éléments sont reliés à une unité centrale de commande, non représentée, destinée à commander le fonctionnement du serveur SC. Les blocs 91, 94 et 95 sont reliés à l'interface de connexion 90. Le bloc d'horodatage 92, interposé entre le bloc de réception 91 et le bloc de traitement 93, est destiné à horodater les rapports de réception reçus. Le bloc de traitement 93, connecté au bloc d'émission 94, est destiné à élaborer, à partir des rapports de réception provenant des terminaux Ti en réception de la source de diffusion S, un bilan statistique concernant la réception par ces terminaux Ti du contenu diffusé par la source de diffusion S.

Chaque terminal récepteur Ti comprend un module de connexion à l'Internet, un navigateur Internet, un module récepteur multicast, une interface homme-machine et une unité centrale de commande, à laquelle sont connectés tous les éléments du terminal Ti et destinée à commander le fonctionnement de celui-ci. L'interface homme-machine comprend un écran de visualisation, un dispositif de saisie comportant ici un clavier et une souris, et un dispositif haut-parleur. Le module de récepteur multicast est agencé pour se mettre en réception d'une source de diffusion S à travers l'Internet et pour envoyer vers le serveur de collecte SC des rapports sur la réception par le terminal Ti du contenu diffusé par cette source S, ici de façon périodique. En fonctionnement, afin de se mettre en réception d'une source de diffusion S à travers l'Internet, le module récepteur, en coopération avec le module de connexion à l'Internet et le navigateur Internet, récupère un flux de données descriptives associées à la source de diffusion S, véhiculant ici un fichier SDP, par téléchargement depuis le site Web SW. A l'aide des informations contenues dans le fichier SDP, le module récepteur se met en réception de la source S, autrement dit acquiert le contenu diffusé par celle-ci, et envoie parallèlement des rapports périodiques sur la réception du contenu diffusé par la source S par le terminal Ti vers l'adresse du serveur de collecte SC, extraite du fichier SDP.

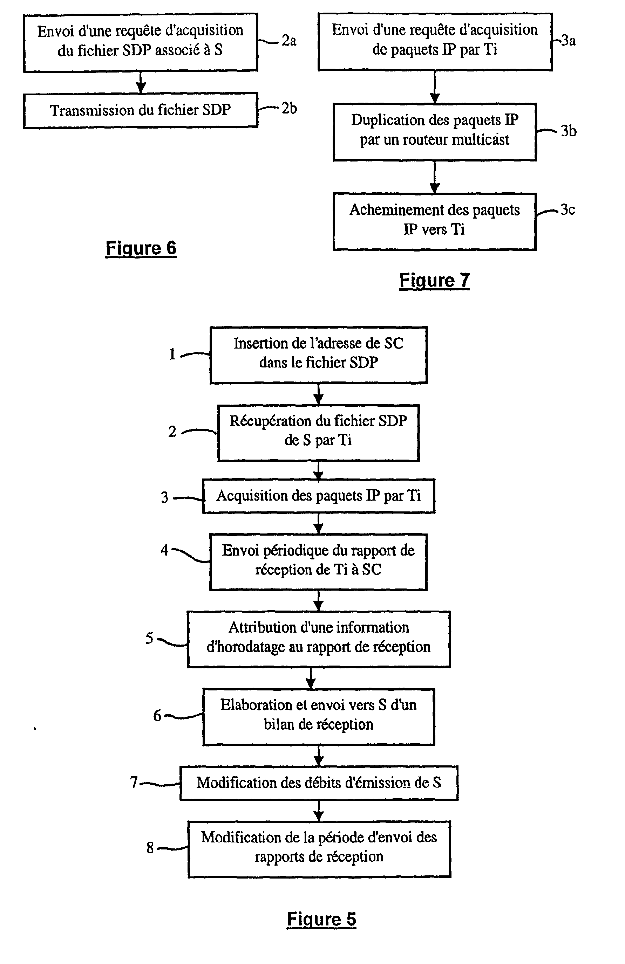

En référence aux figures 4 à 7, on va maintenant décrire le procédé de diffusion en temps réel d'un contenu audiovisuel, à partir de la source S, vers une pluralité de terminaux Ti, à travers l'Internet, en mode multicast. Dans l'exemple particulier de la description, le contenu diffusé est un film vidéo intitulé "la grande vadrouille".

Dans une étape 1, le centre de programmation CP insère un champ, intitulé "q", associé au serveur de collecte SC, dans le fichier SDP spécifique du contenu à diffuser, à savoir le film "la grande vadrouille", ainsi que dans le fichier SDP général de la source S. Le champ "q", explicité ci-après, contient toutes les informations requises pour permettre à un terminal récepteur Ti d'envoyer périodiquement un rapport de réception au serveur de collecte SC.

### Champ q

q= <network type><address type><connection address><port><time period>

Le champ "q", lequel constitue en définitive une commande d'envoi de rapports de réception vers le serveur SC, contient l'indication du réseau auquel appartient le serveur SC, le type de l'adresse du serveur SC, l'adresse du serveur SC, le numéro du port de communication du serveur SC et la période τ d'envoi des rapports de réception vers le serveur SC.

Le fichier SDP de la source et le fichier SDP du film sont transmis au site SW et peuvent être téléchargés depuis ce site par des terminaux. A titre d'exemple, le fichier SDP du film contient les informations suivantes:
v=0
o=chaine1 IN IP4 126.16.64.4
s=La grande vadrouille
u=http://www.chaine1.fr/films/la_grande_vadrouille.htm
e=infos@chaine1.fr
c=IN IP4 224.2.17.12/127
t=2873397496 2873404696
a=recvonly
m=audio 49170 RTP/AVP 0
m=video 51372 RTP/AVP 31
m=application 32416 udp wb
q=IN IP4 224.2.1.1 32416 300

Le champ "q" indique que:
- le serveur SC appartient à l'Internet;
- l'adresse du serveur SC est de type IP4;
- l'adresse IP du serveur SC est 224.2.1.1;
- le numéro du port de communication du serveur SC est 32416 et
- la période τ d'envoi des rapports de réception est égale à 300 secondes.

Dans une étape 2, chaque terminal Ti souhaitant recevoir le film récupère un flux de données descriptives associées à la source de diffusion S, véhiculant soit le fichier SDP spécifique associé au film souhaité, soit le fichier SDP général de la source S. On rappelle que le fichier SDP du film n'est valable que pour la diffusion du film considéré, alors que le fichier SDP de la source permet de se mettre en réception de la source à tout moment, quel que soit le contenu diffusé par celle-ci. Pour récupérer l'un de ces deux fichiers SDP, dans une étape 2a, le terminal se connecte au site Web SW et lui adresse une requête d'acquisition du fichier SDP considéré. Sur réception de cette requête, dans une étape 2b, le site Web SW émet le flux de données descriptives véhiculant le fichier requis vers le terminal Ti qui le mémorise.

La source S diffuse le film vidéo en mode multicast, à travers l'Internet. Pour cela, elle émet des paquets de données IP, véhiculant le contenu audiovisuel, en un seul envoi, à travers l'Internet, vers une pluralité de terminaux récepteurs. Les données audiovisuelles sont ici véhiculées par trois flux vidéos, à 400kbit/s chacun, dont un flux vidéo de base Vb, un premier flux vidéo de rehaussement Ve1 et un second flux vidéo de rehaussement Ve2, et par deux flux audios, à 400kbit/s chacun, dont un flux audio de base Ab et un flux audio de rehaussement Ae. En réception, suivant leurs capacités, les terminaux Ti utilisent les flux vidéo et audio de base Vb et Ab, en y ajoutant éventuellement au moins l'un des flux vidéos de rehaussement Ve1, Ve2 et/ou le flux audio de rehaussement Ae, afin d'améliorer la qualité vidéo et/ou audio.

Dans une étape 3, à partir des informations contenues dans le fichier SDP reçu, chaque terminal Ti souhaitant recevoir le film acquiert les paquets de données IP diffusés par la source S à travers l'Internet. L'étape 3 se décompose en plusieurs sous-étapes:
- le terminal Ti envoie une requête d'acquisition du contenu audiovisuel diffusé par la source S, à savoir le film vidéo "la grande vadrouille", en direction de la source S, à travers l'Internet, par le protocole IGMP, (étape 3a);
- le premier routeur multicast RM qui reçoit cette requête duplique les paquets IP reçus provenant de la source (étape 3b) puis
- il achemine les paquets IP dupliqués vers le terminal Ti, à travers l'Internet (étape 3c).

On rappelle ici que, par définition, un "routeur multicast" est un noeud du réseau qui reçoit des paquets de données IP diffusés par la source S et les achemine vers un ou plusieurs terminaux, après les avoir éventuellement dupliqués, si nécessaire.

Dans une étape 4, sur réception du premier paquet de données IP diffusé par la source S, le terminal Ti envoie au serveur de collecte SC un rapport concernant la réception du contenu diffusé par la source S, à travers l'Internet. Ce premier rapport de réception signale au serveur de collecte SC que le terminal Ti vient de se mettre en réception de la source S. Il contient des informations sur la qualité de la réception, à savoir le débit de réception du terminal Ti et le taux de perte de paquets IP, ainsi qu'une indication géographique de localisation du terminal Ti. Le terminal Ti réitère l'étape 4 périodiquement, à la fréquence 1/τ, jusqu'à ce qu'il interrompe la réception des paquets IP diffusés par la source S. Avant d'interrompre cette réception, s'il en a la possibilité, le terminal Ti envoie un dernier rapport de réception spécifiant qu'il va cesser de recevoir.

Le serveur de collecte SC reçoit les rapports provenant de tous les terminaux Ti du groupe multicast associé à la source S, c'est-à-dire des terminaux Ti en réception de la source S, et attribue à chaque rapport reçu une information d'horodatage, contenant la date et l'heure de réception de ce rapport, dans une étape 5. Par "groupe multicast" de terminaux, on entend désigner l'ensemble des terminaux en réception d'une même source de diffusion multicast S.

Dans une étape 6, à partir des rapports de réception reçus, le serveur de collecte SC élabore un bilan statistique concernant la réception du contenu diffusé par la source S par les terminaux Ti en réception de cette source S. Ce bilan de réception, relatif à la source de diffusion S, contient différents histogrammes concernant respectivement le débit de réception des paquets IP par les terminaux récepteurs Ti, le taux de perte de paquets IP par les terminaux récepteurs Ti et la localisation des terminaux récepteurs Ti. A titre d'exemple, pour un instant donné, l'histogramme relatif au débit de réception fait apparaître en abscisses, différents débits de réception des paquets IP par les terminaux Ti et, en ordonnées, le nombre de terminaux en réception de la source de diffusion S pour chacun de ces débits. Le serveur de collecte SC transmet ensuite ce bilan de réception à la source S, directement ou indirectement.

Dans une étape 7, en tenant compte du bilan concernant la réception d'un ou de plusieurs contenus diffusés par la source de diffusion S, celle-ci peut modifier les débits des flux audios et/ou vidéos en émission afin de les adapter aux conditions réelles de réception. A titre d'exemple, si un nombre important de terminaux ne reçoit pas les flux vidéo et audio de base, Vb et Ab, à 400kbit/s, avec un niveau de qualité satisfaisant, la source S peut créer de nouveaux flux de base à 200kbit/s.

Dans une étape 8, afin de diminuer le nombre de rapports reçus, le serveur SC transmet aux terminaux Ti une commande de modification de la période d'envoi des rapports de réception, avec l'indication d'une nouvelle période τ' supérieure à la période τ. Sur réception de cette commande, chaque terminal Ti remplace l'ancienne période τ par la nouvelle période τ' en mémoire. De la même manière, le serveur SC pourrait diminuer la période d'envoi des rapports de réception afin d'en recueillir davantage.

Le serveur de collecte SC peut être utilisé par plusieurs sources de diffusion S. Dans ce cas, les différentes sources de diffusion S diffusant des contenus audiovisuels vers différents groupes multicast de terminaux récepteurs respectivement, l'ensemble des terminaux récepteurs appartenant aux différents groupes multicast font remonter les rapports de réception vers le même serveur collecte SC. Celui-ci élabore ensuite différents bilans de réception individualisés concernant respectivement les différentes sources de diffusion. En d'autres termes, pour chaque source de diffusion S, le serveur de collecte SC élabore une rapport de réception relatif à cette source de diffusion S et transmet ce bilan à cette source de diffusion S.

Dans la description qui précède, on insère les données descriptives associées à la source S dans un fichier SDP et les terminaux récepteurs Ti récupèrent ce fichier SDP par téléchargement depuis un site Web SW. Les terminaux pourraient récupérer les données descriptives associées à la source par tout autre moyen. On pourrait par exemple insérer ces données descriptives dans un courrier électronique, ou "mail", envoyé au terminal Ti.

Dans une autre variante de réalisation de l'invention, on diffuse les caractéristiques du serveur de collecte à travers un canal de signalisation associé à la source. Dans ce cas, lorsqu'un terminal souhaite recevoir le contenu diffusé par la source de diffusion, il récupère au préalable les informations utiles pour recevoir le canal de signalisation associé à la source, par exemple par téléchargement depuis un site Web, puis se met en réception de ce canal de signalisation afin d'acquérir les données descriptives associées à la source, contenant des informations utiles pour se mettre en réception de cette source ainsi que les caractéristiques du serveur de collecte contenues dans le champ "q" précédemment décrit.

Les données descriptives associées à une source de diffusion, contenant toutes les informations requises pour se mettre en réception de cette source, pourrait être contenues dans un fichier de format autre que SDP, par exemple de format XML.

L'invention pourrait s'appliquer à la diffusion en temps réel de tout type de contenu, à travers un réseau informatique autre que l'Internet. Elle pourrait également s'appliquer à la diffusion en unicast.

## Revendications

1. Procédé de diffusion en temps réel d'un contenu à partir d'une source (S) vers une pluralité de terminaux récepteurs (Ti), à travers un réseau informatique, dans lequel chaque terminal (Ti) récupère des données descriptives associées à la source (S), la source (S) diffuse le contenu à travers le réseau et les terminaux récepteurs (Ti) acquièrent le contenu diffusé, à partir des données descriptives, procédé **caractérisé par le fait qu'**on insère dans lesdites données descriptives une adresse d'un serveur de collecte (SC) et, à partir desdites données descriptives, chaque terminal (Ti) en réception de la source de diffusion (S) envoie un rapport sur la réception par ledit terminal (Ti) du contenu diffusé par ladite source de diffusion (S) vers l'adresse du serveur de collecte (SC).

2. Procédé selon la revendication 1, dans lequel on insère dans lesdites données descriptives une information de périodicité de façon à ce que chaque terminal récepteur (Ti) envoie périodiquement au serveur de collecte (SC) un rapport sur la réception par le terminal (Ti) du contenu diffusé par ladite source de diffusion (S).

3. Procédé selon l'une des revendications 1 et 2, dans lequel chaque terminal (Ti) insère dans le rapport sur la réception par le terminal (Ti) du contenu diffusé par ladite source de diffusion (S) une information sur la qualité de la réception.

4. Procédé selon l'une des revendications 1 à 3, dans lequel chaque terminal (Ti) insère dans le rapport sur la réception par le terminal (Ti) du contenu diffusé par ladite source de diffusion (S) une indication géographique de localisation.

5. Procédé selon l'une des revendications 1 à 4, dans lequel le serveur de collecte (SC) attribue une information d'horodatage à chaque rapport sur la réception par le terminal (Ti) du contenu diffusé par ladite source de diffusion (S) reçu.

6. Procédé selon l'une des revendications 1 à 5, dans lequel le serveur de collecte (SC) élabore un bilan concernant la réception par les terminaux (Ti) du contenu diffusé par la source de diffusion (S), à partir des rapports provenant des terminaux (Ti) en réception de ladite source (S).

7. Procédé selon l'une des revendications 1 à 6, dans lequel, une pluralité de sources diffusant des contenus vers une pluralité de groupes de terminaux récepteurs (Ti), l'ensemble des terminaux appartenant aux différents groupes envoient des rapports concernant la réception des contenus diffusés par leurs sources de diffusion (S) respectives vers le même serveur de collecte (SC).

8. Procédé selon l'une des revendications 1 à 7, dans lequel on insère également dans lesdites données descriptives au moins l'une des informations du groupe contenant l'indication du réseau du serveur de collecte (SC), le type d'adresse du serveur de collecte (SC) et l'indication d'un port de réception des rapports.

9. Procédé selon l'une des revendications 1 à 8, dans lequel le serveur de collecte (SC) transmet aux terminaux récepteurs (Ti) une nouvelle information de périodicité afin de modifier la périodicité d'envoi des rapports.

10. Procédé selon l'une des revendications 1 à 9, dans lequel on insère les données descriptives dans un fichier SDP.

11. Procédé selon l'une des revendications 1 à 10, dans lequel on diffuse l'adresse du serveur de collecte à travers un canal de signalisation associé à la source.

12. Terminal récepteur pour la mise en oeuvre du procédé de la revendication 1, **caractérisé par le fait qu'**il est agencé pour récupérer des données descriptives associées à une source de diffusion (S), lesdites données contenant une adresse d'un serveur de collecte (SC), et pour émettre au moins un rapport concernant la réception d'un contenu diffusé par la source de diffusion (S) vers l'adresse dudit serveur de collecte (SC).

13. Terminal selon la revendication 13, **caractérisé par le fait qu'**il est agencé pour émettre périodiquement des rapports concernant la réception d'un contenu diffusé par la source de diffusion (S) vers l'adresse du serveur de collecte (SC).

14. Système pour la mise en oeuvre du procédé de la revendication 1, comprenant
- une source de diffusion (S) destinée à diffuser un contenu à travers un réseau,
- un serveur de collecte (SC) et
- une pluralité de terminaux récepteurs (Ti) destinés à récupérer des données descriptives associées à la source de diffusion (S), lesdites données descriptives contenant une adresse du serveur de collecte (SC), à acquérir le contenu diffusé par la source de diffusion (S) à partir des données descriptives et à émettre au moins un rapport concernant la réception du contenu diffusé par la source de diffusion (S) vers l'adresse du serveur de collecte (SC),
ledit serveur de collecte (SC) étant destiné à élaborer un bilan concernant la réception par lesdits terminaux (Ti) du contenu diffusé par la source de diffusion (S), à partir des rapports provenant des terminaux (Ti) en réception de ladite source (S).

15. Système selon la revendication 14, dans lequel les terminaux récepteurs (Ti) étant destinés à envoyer périodiquement des rapports de réception au serveur de collecte (SC), ledit serveur de collecte (SC) comprend des moyens (95) pour modifier la périodicité d'envoi des rapports de réception.

16. Flux de données pour la mise en oeuvre du procédé de la revendication 1, contenant des données descriptives relatives à un contenu et/ou à une source de diffusion (S), à partir desquelles un terminal (Ti) peut se mettre en réception d'un contenu diffusé par la source de diffusion (S), **caractérisé par le fait que** lesdites données descriptives contiennent une adresse d'un serveur de collecte de façon à ce que le terminal (Ti), lorsqu'il est en réception d'un contenu diffusé par la source de diffusion (S), envoie un rapport sur la réception dudit contenu vers l'adresse du serveur de collecte (SC).

17. Flux de données selon la revendication 16, dans lequel les données descriptives contiennent au moins l'une des données du groupe comprenant l'indication du réseau auquel appartient le serveur de collecte (SC), le type de l'adresse du serveur de collecte (SC), le numéro d'un port de communication du serveur de collecte (SC) et une période d'envoi de rapports de réception vers le serveur de collecte (SC).

18. Flux de données selon l'une des revendications 16 et 17, dans lequel les données descriptives sont au format SDP.

## Claims

1. Method of broadcasting in real time a content from a source (S) to a plurality of receiving terminals (Ti), via a computer network, in which each terminal (Ti) retrieves descriptive data associated with the source (S), the source (S) broadcasts the content through the network and the receiving terminals (Ti) acquire the broadcast content, based on the descriptive data, the method being **characterized in that** an address of a collecting server (SC) is inserted into said descriptive data and, based on said descriptive data, each terminal (Ti) receiving from the broadcasting source (S) sends a report on the reception by said terminal (Ti) of the content broadcast by said broadcasting source (S) to the address of the collecting server (SC).

2. Method according to Claim 1, in which periodicity information is inserted into said descriptive data so that each receiving terminal (Ti) periodically sends to the collecting server (SC) a report on the reception by the terminal (Ti) of the content broadcast by said broadcasting source (S).

3. Method according to one of Claims 1 and 2, in which each terminal (Ti) inserts into the report on the reception by the terminal (Ti) of the content broadcast by said broadcasting source (S) information on reception quality.

4. Method according to one of Claims 1 to 3, in which each terminal (Ti) inserts into the report on the reception by the terminal (Ti) of the content broadcast by said broadcasting source (S) a geographic location indication.

5. Method according to one of Claims 1 to 4, in which the collecting server (SC) assigns date stamp information to each report on the reception by the terminal (Ti) of the content broadcast by said broadcasting source (S) received.

6. Method according to one of Claims 1 to 5, in which the collecting server (SC) creates a balance sheet concerning the reception by the terminals (Ti) of the content broadcast by the broadcasting source (S), based on the reports originating from the terminals (Ti) receiving from said source (S).

7. Method according to one of Claims 1 to 6, in which, with a plurality of sources broadcasting contents to a plurality of groups of receiving terminals (Ti), all the terminals belonging to the various groups send reports concerning the reception of the contents broadcast by their respective broadcasting sources (S) to one and the same collecting server (SC).

8. Method according to one of Claims 1 to 7, in which there is also inserted into said descriptive data at least one of the group information items containing the indication of the network of the collecting server (SC), the address type of the collecting server (SC) and the indication of a port for receiving the reports.

9. Method according to one of Claims 1 to 8, in which the collecting server (SC) transmits to the receiving terminals (Ti) new periodicity information in order to modify the periodicity with which the reports are sent.

10. Method according to one of Claims 1 to 9, in which the descriptive data is inserted into an SDP file.

11. Method according to one of Claims 1 to 10, in which the address of the collecting server is broadcast via a signalling channel associated with the source.

12. Receiving terminal for implementing the method of Claim 1, **characterized in that** it is arranged to retrieve descriptive data associated with a broadcasting source (S), said data containing an address of a collecting server (SC), and to send at least one report concerning the reception of a content broadcast by the broadcasting source (S) to the address of said collecting server (SC).

13. Terminal according to Claim 13, **characterized in that** it is arranged to periodically send reports concerning the reception of a content broadcast by the broadcasting source (S) to the address of the collecting server (SC).

14. System for implementing the method of Claim 1, comprising
- a broadcasting source (S) for broadcasting a content across a network,
- a collecting server (SC), and
- a plurality of receiving terminals (Ti) intended to retrieve descriptive data associated with the broadcasting source (S), said descriptive data containing an address of the collecting server (SC), to acquire the content broadcast by the broadcasting source (S) based on the descriptive data and to send at least one report concerning the reception of the content broadcast by the broadcasting source (S) to the address of the collecting server (SC),
said collecting server (SC) being designed to create a balance sheet concerning the reception by said terminals (Ti) of the content broadcast by the broadcasting source (S), based on the reports originating from the terminals (Ti) receiving from said source (S) .

15. System according to Claim 14, in which, the receiving terminals (Ti) being intended to periodically send reception reports to the collecting server (SC), said collecting server (SC) includes means (95) for modifying the periodicity with which the reception reports are sent.

16. Data flow for implementing the method of Claim 1, containing descriptive data relating to a content and/or to a broadcasting source (S), based on which a terminal (Ti) can start receiving a content broadcast by the broadcasting source (S), **characterized in that** said descriptive data contains an address of a collecting server so that the terminal (Ti), when it is receiving a content broadcast by the broadcasting source (S), sends a report on the reception of said content to the address of the collecting server (SC).

17. Data flow according to Claim 16, in which the descriptive data contains at least one of the data items of the group comprising the indication of the network to which the collecting server (SC) belongs, the address type of the collecting server (SC), the number of a communication port of the collecting server (SC), and a period for sending reception reports to the collecting server (SC).

18. Data flow according to one of Claims 16 and 17, in which the descriptive data is in SDP format.

## Patentansprüche

1. Verfahren zur Verbreitung eines Inhalts in Echtzeit von einer Quelle (S) zu einer Vielzahl von Empfangsterminals (Ti) durch ein Informatiknetz, bei dem jedes Terminal (Ti) beschreibende Daten, die mit der Quelle (S) verbunden sind, erhaltet, die Quelle (S) den Inhalt durch das Netz verbreitet und die Empfangsterminals (Ti) den verbreiteten Inhalt aus den beschreibenden Daten erwerben, wobei das Verfahren **dadurch gekennzeichnet ist, dass** in die beschreibenden Daten eine Adresse eines Sammelservers (SC) eingesetzt wird, und aus den beschreibenden Daten jedes von der Verbreitungsquelle (S) empfangende Terminal (Ti) einen Bericht über den Empfang des von der Verbreitungsquelle (S) zur Adresse des Sammelservers (SC) verbreiteten Inhalts durch das Terminal (Ti) sendet.

2. Verfahren nach Anspruch 1, bei dem in die beschreibenden Daten eine Periodizitätsinformation eingefügt wird, so dass jedes Empfangsterminal (Ti) periodisch an den Sammelserver (SC) einen Bericht über den Empfang des von der Verbreitungsquelle (S) verbreiteten Inhalts durch das Terminal (Ti) sendet.

3. Verfahren nach einem der Ansprüche 1 und 2, bei dem jedes Terminal (Ti) in den Bericht über den Empfang des von der Verbreitungsquelle (S) verbreiteten Inhalts durch das Terminal (Ti) eine Information über die Qualität des Empfangs einfügt.

4. Verfahren nach einem der Ansprüche 1 bis 3, bei dem jedes Terminal (Ti) in den Bericht über den Empfang des von der Verbreitungsquelle (S) verbreiteten Inhalts durch das Terminal (Ti) eine geografische Lokalisierungsanzeige einfügt.

5. Verfahren nach einem der Ansprüche 1 bis 4, bei dem der Sammelserver (SC) eine Zeitstempelinformation jedem Bericht über den Empfang des von der Verbreitungsquelle (S) verbreiteten empfangenen Inhalts durch das Terminal (Ti) zuordnet.

6. Verfahren nach einem der Ansprüche 1 bis 5, bei dem der Sammelserver (SC) eine Bilanz zum Empfang des von der Verbreitungsquelle (S) verbreiteten Inhalts aus den von den Terminals (Ti) beim Empfang von der Quelle (S) kommenden Berichten erarbeitet.

7. Verfahren nach einem der Ansprüche 1 bis 6, bei dem, wobei eine Vielzahl von Quellen Inhalte zu einer Vielzahl von Empfangsterminalgruppen (Ti) verbreiten, die Gesamtheit der Terminals, die den verschiedenen Gruppen angehören, Berichte über den Empfang der von ihren jeweiligen Verbreitungsquellen (S) verbreiteten Inhalte zu demselben Sammelserver (SC) senden.

8. Verfahren nach einem der Ansprüche 1 bis 7, bei dem in die beschreibenden Daten auch mindestens eine der Informationen der Gruppe, die die Angabe des Netzes des Sammelservers (SC), den Adresstyp des Sammelservers (SC) und die Angabe eines Empfangsports der Berichte enthält, eingefügt wird.

9. Verfahren nach einem der Ansprüche 1 bis 8, bei dem der Sammelserver (SC) an die Empfangsterminals (Ti) eine neue Periodizitätsinformation überträgt, um die Periodizität des Sendens der Berichte zu ändern.

10. Verfahren nach einem der Ansprüche 1 bis 9, bei dem die beschreibenden Daten in eine SDP-Datei eingefügt werden.

11. Verfahren nach einem der Ansprüche 1 bis 10, bei dem die Adresse des Sammelservers durch einen mit der Quelle verbundenen Anzeigekanal verbreitet wird.

12. Empfangsterminal für den Einsatz des Verfahrens aus Anspruch 1, **dadurch gekennzeichnet, dass** es derart angeordnet ist, dass es beschreibende Daten, die mit einer Verbreitungsquelle (S) verbunden sind, erhaltet, wobei die Daten eine Adresse eines Sammelservers (SC) enthalten, und dass es mindestens einen Bericht über den Empfang eines von der Verbreitungsquelle (S) an die Adresse des Sammelservers (SC) verbreiteten Inhalts sendet.

13. Terminal nach Anspruch 13, **dadurch gekennzeichnet, dass** es derart angeordnet ist, dass es periodisch Berichte über den Empfang eines von der Verbreitungsquelle (S) an die Adresse des Sammelservers (SC) verbreiteten Inhalts sendet.

14. System für den Einsatz des Verfahrens aus Anspruch 1, umfassend:
- eine Verbreitungsquelle (S), die dazu bestimmt ist, einen Inhalt durch ein Netz zu verbreiten,
- einen Sammelserver (SC) und
- eine Vielzahl von Empfangsterminals (Ti), die dazu bestimmt sind, beschreibende Daten, die mit der Verteilungsquelle (S) verbunden sind, wiederzugewinnen, wobei die beschreibenden Daten eine Adresse des Sammelservers (SC) enthalten, den von der Verbreitungsquelle (S) verbreiteten Inhalt aus den beschreibenden Daten zu erfassen und mindestens einen Bericht über den Empfang des von der Verbreitungsquelle (S) an die Adresse des Sammelservers (SC) verbreiteten Inhalts zu senden,
wobei der Sammelserver (SC) dazu bestimmt ist, eine Bilanz über den Empfang des von der Verbreitungsquelle (S) verbreiteten Inhalts durch die Terminals (Ti) aus den Berichten, die von den Terminals (Ti) beim Empfang von der Quelle (S) kommen, auszuarbeiten.

15. System nach Anspruch 14, bei dem die Empfangsterminals (Ti) dazu bestimmt sind, periodisch Empfangsbereichte an den Sammelserver (SC) zu senden, und der Sammelserver (SC) Mittel (95) umfasst, um die Sendeperiodizität der Empfangsberichte zu verändern.

16. Datenfluss für den Einsatz des Verfahrens aus Anspruch 1, umfassend beschreibende Daten im Zusammenhang mit einem Inhalt und/oder einer Verbreitungsquelle (S), auf deren Basis sich ein Terminal (Ti) für den Empfang eines von der Verbreitungsquelle (S) verbreiteten Inhalts bereit machen kann, **dadurch gekennzeichnet, dass** die beschreibenden Daten eine Adresse eines Sammelservers umfassen, so dass dieses Terminal (Ti), wenn es gerade einen von der Verbreitungsquelle (S) verbreiteten Inhalt empfängt, einen Bericht über den Empfang dieses Inhalts an die Adresse des Sammelservers (SC) sendet.

17. Datenfluss nach Anspruch 16, bei dem die beschreibenden Daten mindestens eines der Daten aus der Gruppe, umfassend die Angabe des Netzes, dem der Sammelserver (SC) angehört, den Adresstyp des Sammelservers (SC), die Nummer eines Kommunikationsports des Sammelservers (SC) und eine Sendeperiode der Empfangsberichte zum Sammelserver (SC), enthalten.

18. Datenfluss nach einem der Ansprüche 16 und 17, bei dem die beschreibenden Daten im SDP-Format sind.
